# FASCICULE DE BREVET EUROPEEN

(11) **EP 0 680 692 B1**
(45) Date de publication et mention de la délivrance du brevet: **07.01.1998**
(21) Numéro de dépôt: 95460013.6
(22) Date de dépôt: 14.03.1995
(51) Int. Cl.: A01K 1/015

(54) **Plancher pourvu de moyens d'évacuation des excréments**
Stallboden mit Einrichtung zur Abführung von Exkrementen
Stable floor with evacuation means for excrements

(30) Priorité: 01.07.1994 FR 9408372
(43) Date de publication de la demande: 08.11.1995
(73) Titulaire: GALVELPOR SA, F-29208 Landerneau (FR)
(72) Inventeur: Lagadec, Jean, F-29480 Le Relecq-Kerhuon (FR)
(74) Mandataire: Le Guen, Louis François

(56) Documents cités:
- EP-A- 0 161 717
- DE-A- 2 008 166
- DE-B- 1 068 503
- FR-A- 1 535 714

## Description

La présente invention concerne un plancher de case pour animaux, du type qui comporte des moyens pour l'évacuation des excréments formés à la surface dudit plancher, ledit plancher étant monté au-dessus de moyens, tels qu'une fosse, de récupération des excréments. Un tel plancher est notamment utilisé dans une porcherie et lesdits moyens d'évacuation facilitent l'évacuation des excréments des porcs, lorsqu'une partie de ces excréments ne s'est pas écoulée, sans intervention humaine, dans lesdits moyens de récupération.

On connaît déjà des planchers pourvus de moyens permettant de faciliter l'évacuation des excréments des porcs. Ces moyens sont constitués d'une trappe qui est formée dans le plancher et qui est prévue pour être soulevée lorsqu'on souhaite y évacuer les excréments.

Les planchers munis de tels moyens d'évacuation placés, par exemple, dans des cases de maternité, peuvent parfois présenter des dangers pour les truies et les porcelets. En effet, la trappe peut
entraîner, lorsqu'elle est ouverte, la chute de porcelets, ou encore blesser les membres inférieurs des truies. De plus, de tels moyens d'évacuation des excréments nécessitent, pour leur ouverture, une intervention manuelle quotidienne.

On a déjà tenté de remédier en partie à ces inconvénients en utilisant un caillebotis, comme le décrit le document DE-A-4 010 817, dont une partie latérale pivote par rapport à l'un de ses bords et forme ainsi un orifice. L'orifice réalisé de cette manière sur les bords latéraux du caillebotis évite aux truies de se blesser les membres inférieurs car elles n'atteignent pas cet endroit, mais cela n'empêche pas la chute des porcelets quand la partie latérale n'est pas replacée dans sa position fermée.

On a également imaginé de pourvoir le plancher d'une porcherie de moyens d'évacuation des excréments qui sont constitués d'au moins une partie dudit plancher qui est prévue pour être inclinée vers un orifice d'évacuation. Cet orifice se trouve dans un plan sensiblement vertical qui débouche sur lesdits moyens de récupération. On pourra se référer au document de brevet FR-A-1 535 714 pour la description détaillée d'un tel plancher.

Le but de la présente invention est d'obvier aux inconvénients cités ci-dessus en proposant un plancher tel que celui précité dont les moyens qui permettent l'évacuation des excréments suppriment les risques de blessure des truies et en même temps, suppriment les risques de chute des porcelets, tout en facilitant l'évacuation des excréments.

A cet effet, un plancher selon l'invention est caractérisé en ce que ladite ou chaque partie dudit plancher qui est prévue pour être inclinée vers un orifice d'évacuation des excréments est inclinable de la surface dudit plancher vers ledit orifice.

Du fait de l'inclinaison de ladite partie, les excréments sont facilement évacués de la surface du plancher, à l'aide par exemple, d'une brosse ou d'une raclette, via l'orifice, vers la fosse qui est située normalement en dessous du plancher.

L'orifice se trouvant dans un plan sensiblement vertical, les animaux ne courent plus le risque de se blesser les membres inférieurs et les petits de passer à travers.

La partie inclinable dudit plancher est un caillebotis prévu à l'arrière de la zone du plancher normalement destinée à l'animal.

Afin d'éviter le risque pour les nouveaux nés de tomber par l'orifice, on a prévu que ladite partie puisse pivoter. Ainsi, elle peut prendre, d'une part, sa position inclinée et, d'autre part, une position dans laquelle elle se trouve dans le plan dudit plancher,
notamment lors des périodes où les nouveau-nés ont une anatomie leur faisant courir le risque de passer à travers l'orifice d'évacuation.

Ledit caillebotis comprend, sur un de ses bords, un axe se trouvant dans le plan dudit plancher et monté pivotant sur ledit plancher.

L'invention concerne également un plancher du type plancher de case pour truie et porcelets qui comporte un premier ensemble constitué d'une pluralité de caillebotis et destiné à recevoir la truie et au moins un second ensemble constitué d'une pluralité de caillebotis et destiné à recevoir lesdits porcelets.

Selon une autre caractéristique de l'invention, ladite partie inclinable se trouve dans ledit premier ensemble, avantageusement à l'arrière du premier ensemble destiné à ladite truie.

L'invention concerne également un plancher du type tel que l'on vient de décrire mais dont le premier ensemble de caillebotis et le second ensemble de caillebotis sont fixés sur au moins une poutre pourvue de fils de caillebotis.

Lorsque ledit premier ensemble et ledit second ensemble se trouvent à un même niveau, les fils de caillebotis des poutres sont droits.

Dans le cas où le ledit premier ensemble et ledit second ensemble se trouvent à des niveaux différents, les fils de caillebotis des poutres sont coudés de manière à suivre les niveaux desdits ensembles de caillebotis.

Les caractéristiques de l'invention mentionnées ci-dessus, ainsi que d'autres, apparaîtront plus clairement à la lecture de la description suivante d'un exemple de réalisation préféré, ladite description étant faite en relation avec les dessins joints, parmi lesquels:
la Fig. 1 est une vue d'ensemble en perspective d'un plancher pour case selon l'invention,
la Fig. 2 est une vue de la partie du plancher qui forme l'orifice d'évacuation des excréments, dans une position inclinée,
la Fig. 3 est une vue de la partie du plancher qui forme l'orifice d'évacuation des excréments, dans une position horizontale, et
la Fig. 4 est une vue de la partie d'un plancher qui forme l'orifice d'évacuation des excréments, ledit plancher étant constitué de plusieurs zones de niveaux différents.

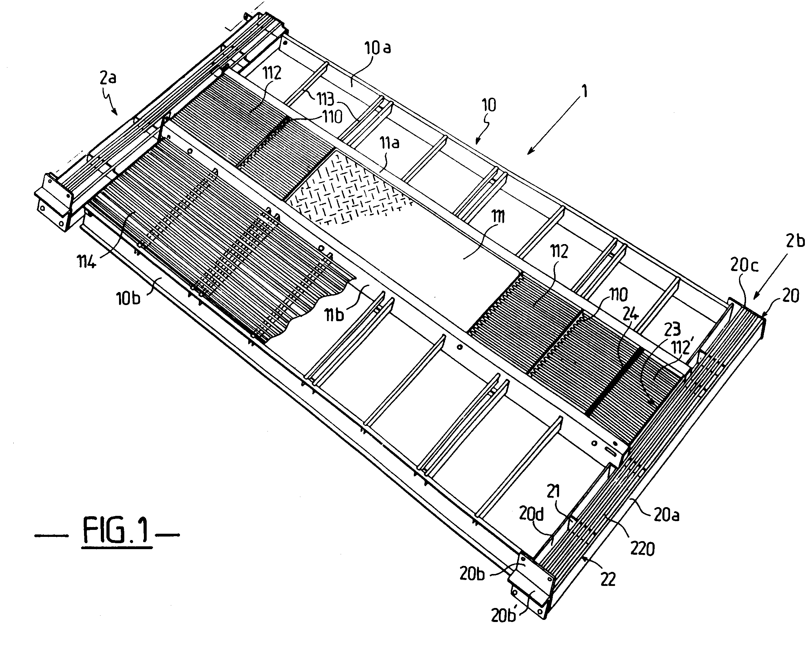

Le plancher 1 de la présente invention, représenté en perspective à la Fig. 1, est formé d'un cadre 10 sensiblement rectangulaire, les parois transversales dudit cadre 10 étant constituées de poutres 2 et les parois longitudinales étant constituées de longerons latéraux 10a et 10b fixés par leurs extrémités aux poutres 2. Deux longerons centraux 11a et 11b placés à l'intérieur du cadre 10, parallèlement aux longerons 10a et 10b, reposent, par leurs extrémités sur les poutres 2. Des traverses 110 sont montées perpendiculairement entre les longerons 11a et 11b. Lesdites traverses 110 permettent, d'une part, de supporter au milieu une plaque métallique 111 prévue pour porter la truie et, d'autre part, de fixer de chaque côté de la plaque 111 des caillebotis métalliques 112. Les caillebotis 112 et la plaque 111 forment un premier ensemble qui est destiné à recevoir la truie. Entre le longeron latéral 10a et le longeron central 11a et entre le longeron latéral 10b et le longeron central 11b, sont disposées perpendiculairement des traverses 113 parallèles entre elles et prévues pour supporter des caillebotis 114, par exemple en matière plastique. Les caillebotis 114 forment un second ensemble destiné à recevoir les porcelets.

Toutes les cases n'ayant pas les mêmes formes, les longerons latéraux 10a et 10b du plancher 1 ne sont pas nécessairement parallèles entre eux et parallèles aux longerons centraux 11a et 11b.

Les poutres 2 sont constituées d'un cadre rectangulaire allongé 20 dont les parois sont des plaques métalliques 20a, 20b, 20c et 20d. Entre les plaques longitudinales 20a et 20d, sont placées perpendiculairement des traverses 21 parallèles entre elles et prévues pour supporter la partie supérieure 22 de la poutre 2. Celle-ci forme un élément de caillebotis, par exemple constitué de quatre fils droits de section triangulaire 220, parallèles entre eux et s'étendant sur toute la longueur de la poutre 2.
Toutes les cases n'ayant pas la même longueur, il est possible de rajouter des fils de caillebotis 220 de manière à élargir les poutres 2.

Chaque poutre 2 repose, par une extrémité, directement sur un muret (non représenté) et, par l'autre extrémité, sur un autre muret (également non représenté) par l'intermédiaire d'une plaque 20b' fixée à une des extrémités des poutres 2.

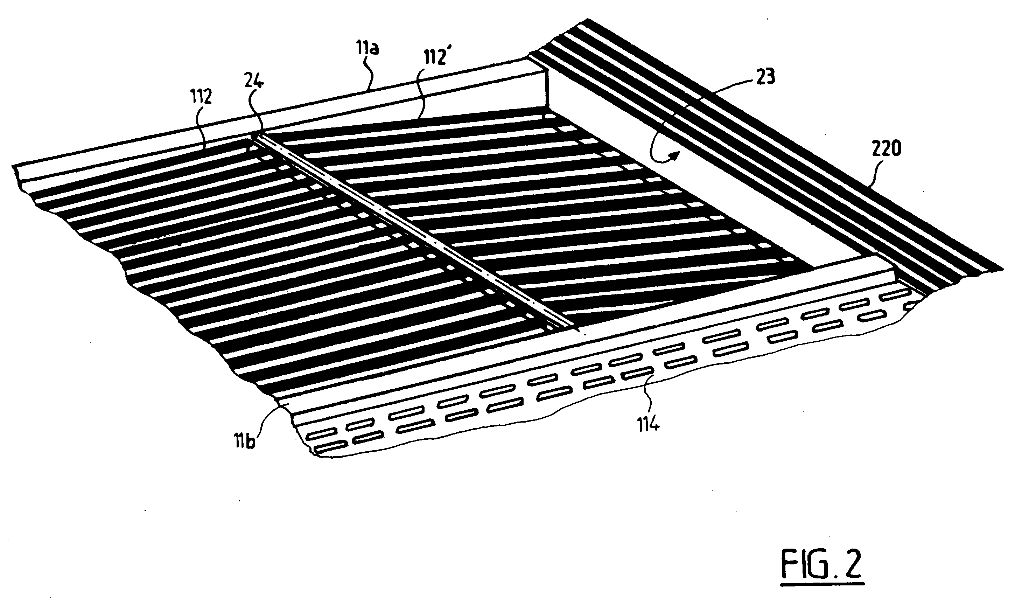

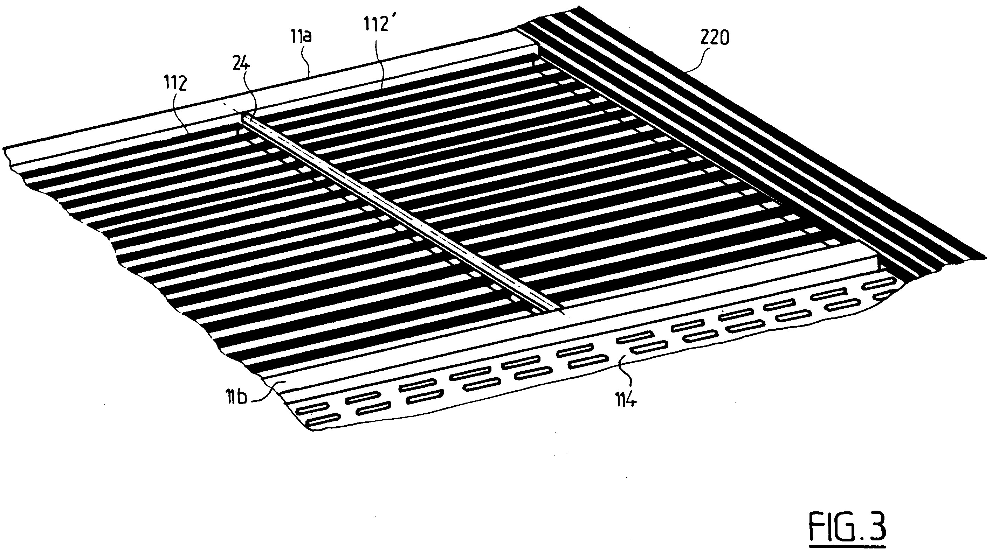

Comme on peut le voir aux Figs. 2 et 3, un caillebotis 112', placé à l'arrière de la zone du plancher 1 normalement destinée à l'animal, est monté adjacent à la poutre arrière 2b, et il est légèrement inclinable de manière à pouvoir s'abaisser du côté de la poutre 2b. Le caillebotis 112' est prévu pour pouvoir pivoter, sous l'action de tout moyen approprié (non représenté), autour d'un axe qui se trouve dans le plan du plancher 1. Ainsi, il peut prendre, d'une part, la position inclinée représentée à la Fig. 2 et, d'autre part, la position horizontale représentée à la Fig. 3.

Le caillebotis 112' a un côté qui se trouve dans le plan du plancher 1. Lorsque le caillebotis 112' a été actionné dans la position inclinée de la Fig. 2, un orifice d'évacuation 23 qui se trouve dans un plan sensiblement vertical est formé le long du côté opposé au côté précité. Les excréments sont alors facilement évacués, à l'aide, par exemple, d'une brosse ou d'une raclette, de la face supérieure du plancher 1, via l'orifice 23, vers la fosse qui est située normalement en dessous du plancher 1 et sur laquelle débouche l'orifice d'évacuation 23 dans ladite position inclinée.

Pour ce faire, il comprend, sur un de ses bords, un axe 24 qui se trouve dans le plan dudit plancher 1 et qui est monté pivotant, par exemple, dans des trous prévus sur le plancher 1.

Des moyens (également non représentés) permettent de verrouiller le caillebotis 112' dans l'une ou l'autre de ses positions.

On note que la position normale d'utilisation du plancher 1 est celle décrite sur la Fig. 2, lorsque le caillebotis 112' est incliné. Ainsi, le plancher de l'invention ne nécessite aucune intervention manuelle d'ouverture, dans la mesure où l'orifice 23 est toujours ouvert et permet l'évacuation des excréments. De plus, l'orifice 23 étant formé dans un plan vertical, les truies ne risquent pas de s'y blesser. De plus, du fait de la faible ouverture de l'orifice 23 nécessaire pour une bonne évacuation des excréments, les porcelets ne risquent pas de tomber dans ledit orifice 23.

Ce n'est que momentanément, c'est-à-dire aux alentours de la mise bas des truies, que la position horizontale du caillebotis 112' représentée à la Fig. 3 est utilisée. Cela permet d'empêcher les nouveau-nés de tomber par l'orifice 23 lorsqu'ils ont une anatomie leur faisant courir un tel risque. La position horizontale est également utilisée momentanément dans d'autres types de cases, lorsqu'on veut évacuer ou faire entrer un porc dans une case pourvue de tels moyens afin que l'orifice 23 ne gêne pas le passage du porc.

Ainsi, le plancher de la présente invention permet un bon passage des excréments tout en supprimant les risques de blessure pour les porcs.

On notera que le plancher de la présente invention peut être utilisé pour tout type de case, qu'elle soit de maternité, de gestation, ou autre.

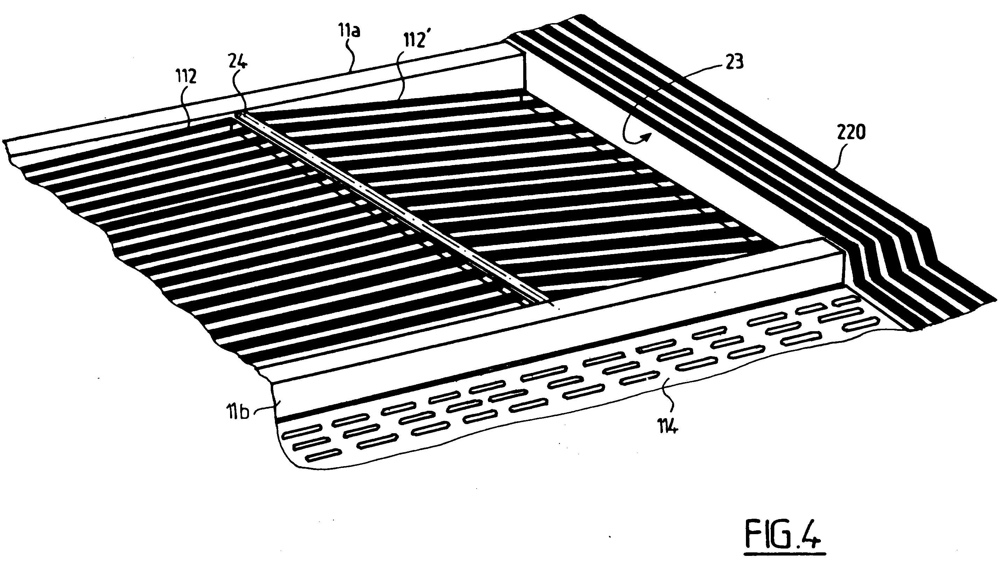

A la Fig. 4, on a représenté un plancher de case de maternité. Dans ce type de plancher, les caillebotis 112 et la plaque 111 sont réservés à la truie alors que les caillebotis 114 sont réservés aux porcelets. Les caillebotis 114 sont alors généralement à un niveau inférieur au niveau des caillebotis 112. Il en résulte que, pour ne pas obstruer l'ouverture 23, ce qui serait le cas si les fils 220 étaient droits et au niveau des caillebotis 114, les fils de caillebotis 220 des poutres 2 sont coudés de manière à suivre les différents niveaux du plancher 1.

Par contre aux Figs. 1, 2 et 3, les caillebotis 112 et 114 sont au même niveau. Il en résulte que les fils 220 sont droits.

Bien que la description soit relative à un plancher de case pour truie et porcelets, l'invention s'applique également à tout type de case pour animaux.

## Revendications

1. Plancher de case pour animaux comportant des moyens d'évacuation des excréments formés à la surface dudit plancher (1), ledit plancher (1) étant monté au-dessus de moyens, tels qu'une fosse, de récupération des excréments, lesdits moyens d'évacuation étant constitués d'au moins une partie (112') dudit plancher (1) prévue pour être inclinée vers un orifice d'évacuation (23) des excréments se trouvant dans un plan sensiblement vertical et débouchant sur lesdits moyens de récupération, caractérisé en ce que ladite ou chaque partie (112') dudit plancher (1) est inclinable de la surface dudit plancher (1) vers ledit orifice (23).

2. Plancher de case pour animaux selon la revendication 1, caractérisé en ce que la partie inclinable dudit plancher (1) est un caillebotis (112') prévu à l'arrière de la zone du plancher (1) normalement destinée à un animal.

3. Plancher de case pour animaux selon la revendication 1 ou 2, caractérisé en ce que ladite partie (112') peut pivoter pour prendre, soit sa position inclinée, soit une position dans laquelle elle se trouve dans le plan dudit plancher (1).

4. Plancher de case pour animaux selon la revendication 3, caractérisé en ce que ledit caillebotis (112') comprend, sur un de ses bords, un axe (24) monté pivotant dans le plan dudit plancher (1).

5. Plancher de case pour animaux selon l'une des revendications précédentes, du type plancher de case pour truie et porcelets qui comporte un premier ensemble constitué d'une pluralité de caillebotis (112) et destiné à recevoir la truie et au moins un second ensemble constitué d'une pluralité de caillebotis (114) et destiné à recevoir lesdits porcelets, caractérisé en ce que ladite partie inclinable (112') se trouve dans ledit premier ensemble.

6. Plancher de case selon la revendication 5, caractérisé en ce que le caillebotis inclinable (112') se trouve à l'arrière du premier ensemble destiné à ladite truie.

7. Plancher de case selon la revendication 6, du type dont le premier ensemble de caillebotis (112) et le second ensemble de caillebotis (114) sont fixés sur au moins une poutre (2) pourvues de fils de caillebotis (220), ledit premier ensemble et ledit second ensemble se trouvant à un même niveau, caractérisé en ce que les fils de caillebotis (220) des poutres (2) sont droits.

8. Plancher de case selon la revendication 6, du type dont le premier ensemble de caillebotis (112) et le second ensemble de caillebotis (114) sont fixés sur au moins une poutre (2) pourvue de fils de caillebotis (220), ledit premier ensemble et ledit second ensemble se trouvant à des niveaux différents, caractérisé en ce que les fils de caillebotis (220) des poutres (2) sont coudés de manière à suivre les niveaux desdits ensembles de caillebotis (112, 114).

## Claims

1. Stable floor with means of evacuation of excrement formed on the surface of said floor (1), said floor (1) being mounted above means, such as a pit, of excrement collection, said means of evacuation being comprised of at least one part (112') of said floor (1) provided for being inclined towards an evacuation opening (23) for excrement situated in an approximately vertical plane and flowing into said means of collection, characterised in that said part or each part (112') of said floor is inclinable from the surface of said floor (1) towards said opening (23).

2. Stable floor according to Claim 1, characterised in that the inclinable part of said floor (1) is a grating (112') provided to the rear of the area of floor (1) normally intended for an animal.

3. Stable floor according to Claim 1 or 2, characterised in that said part (112') can pivot to assume either its inclined position or a position in which it lies in the plane of said floor (1).

4. Stable floor according to Claim 3, characterised in that said grating (112') comprises, on one of its edges, an axis (24) pivotally mounted in the plane of said floor (1).

5. Stable floor according to one of the previous claims, of the type floor for sow and piglet pen which comprises a first assembly comprising a plurality of gratings (112) and intended for the sow and at least a second assembly made up of a plurality of gratings (114) and intended for the piglets characterised in that said inclinable part (112') is located within said first assembly.

6. Pen floor according to Claim 5, characterised in that the inclinable grating (112') is situated behind the first assembly intended for said sow.

7. Pen floor according to Claim 6 of the type of which the first grating assembly (112) and the second grating assembly (114) are fixed on to at least one beam (2) provided with grating wire (220), said first assembly and said second assembly being located on the same level, characterised in that the grating wires (220) of the beams (2) are straight.

8. Stable floor according to Claim 6, of the type of which the first grating assembly (112) and the second grating assembly (114) are fixed on to at least one beam (2) provided with grating wires (220), said first assembly and said second assembly being located at different levels, characterised in that the grating wires (220) of the beams (2) are bent in such a way as to follow the levels of said grating assemblies (112, 114).

## Patentansprüche

1. Stallbodenfach für Tiere, enthaltend Mittel zur Abführung von auf der Oberfläche des Stallbodens (1) befindlichen Exkrementen, wobei der Stallboden (1) über Mitteln wie beispielsweise einer Grube zur Wiedergewinnung der Exkremente angeordnet ist, wobei diese Wiedergewinnungsmittel durch wenigstens einen Teil (112') des Stallbodens (1) gebildet werden, der in Richtung einer Öffnung (23) zur Wiedergewinnung der Exkremente, die sich in einer im wesentlichen vertikalen Ebene befindet und auf den Wiedergewinnungsmitteln mündet, geneigt werden kann, dadurch gekennzeichnet, daß der vorgenannte oder jeder Teil (112') des Stallbodens (1) von der Oberfläche des Stallbodens (1) in Richtung auf die Öffnung (23) zu geneigt werden kann.

2. Stallbodenfach für Tiere nach Anspruch 1, dadurch gekennzeichnet, daß der schwenkbare Teil des Stallbodens (1) ein im hinteren Teil des normalerweise für ein Tier bestimmten Bereichs des Stallbodens (1) befindlicher Gitterrost (112') ist.

3. Stallbodenfach für Tiere nach Anspruch 1 oder 2, dadurch gekennzeichnet, daß der Teil (112') schwenkbar ausgebildet ist, so daß er entweder seine geneigte Position oder eine Position einnehmen kann, in der er sich auf der Ebene des Stallbodens (1) befindet.

4. Stallbodenfach nach Anspruch 3, dadurch gekennzeichnet, daß der Gitterrost (112') an einem seiner Ränder mit einer Achse (24) versehen ist, die in die Ebene des Stallbodens (1) geschwenkt werden kann.

5. Stallboden nach einem der vorangehenden Ansprüche nach Art eines Stallbodenfachs für Mutterschweine und Ferkel, das eine erste bauliche Einheit enthält, die aus einer Mehrzahl von Gitterrosten (112) besteht und dazu bestimmt ist, das Mutterschwein aufzunehmen und wenigstens eine zweite Einheit, die aus einer Mehrzahl von Gitterrosten (114) besteht und dazu bestimmt ist, die Ferkel aufzunehmen, dadurch gekennzeichnet, daß sich der schwenkbare Teil (112') in der ersten Einheit befindet.

6. Stallbodenfach nach Anspruch 5, dadurch gekennzeichnet, daß sich der schwenkbare Gitterrost (112') im hinteren Teil der ersten für das Mutterschwein bestimmten Einheit befindet.

7. Stallbodenfach nach Anspruch 6, des Typs, dessen erste Gitterrost-Einheit (112) und zweite Gitterrost-Einheit (114) auf wenigstens einem Träger (2) befestigt und mit Gitterrost-Drähten (220) versehen sind, wobei sich die erste und zweite Einheit auf derselben Ebene befinden, dadurch gekennzeichnet, daß die Drähte des Gitterrostes (220) der Träger (2) aufrecht stehen.

8. Stallbodenfach nach Anspruch 6 des Typs, dessen erste Gitterrost-Einheit (112) und zweite Gitterrost-Einheit (114) auf wenigstens einem Träger (2) befestigt und mit Gitterrost-Drähten (220) versehen sind, wobei sich die erste und zweite Einheit auf verschiedenen Ebenen befinden, dadurch gekennzeichnet, daß die Drähte der Gitterroste (220) der Träger (2) abgewinkelt sind, so daß sie den Ebenen der Gitterrost-Einheiten (112, 114) folgen.
